# EUROPÄISCHE PATENTANMELDUNG

(11) **EP 1 508 730 A1**
(43) Veröffentlichungstag der Anmeldung: **23.02.2005**
(21) Anmeldenummer: 04018647.0
(22) Anmeldetag: 06.08.2004
(51) Int. Cl.: F16K 17/30

(54) **Strömungswächter zum automatischen Absperren von mit Fluid durchströmten Leitungen**

(30) Priorität: 22.08.2003 DE 20312986 U
(71) Anmelder: Metallwerke Otto Dingerkus GmbH, 57439 Attendorn (DE)
(72) Erfinder: Hartung, Karl-Heinz, 57439 Attendorn (DE)
(74) Vertreter: Stenger, Watzke & Ring Patentanwälte

(57) **Zusammenfassung**

Die Erfindung betrifft einen Strömungswächter zum automatischen Absperren von mit einem Medium durchströmten Leitungen und/oder Armaturen oder dergleichen bei einem einen definierten Maximalfluß übersteigenden Fluidfluß, der einen definierten Raum innerhalb des Strömungskanals einnimmt, ohne aufgrund von Bewegungen über diesen definierten Raum hinaus zu reichen, dessen beim Auslösen zu bewegenden Massen möglichst klein sind, wobei zur Führung eines Absperrkörpers (3) ein Führungselement (5) vorgesehen ist, das nach Art eines Stiftes ausgebildet und an einem Stützelement (2) angeordnet ist, wobei der Absperrkörper (3) relativ bewegbar zum Führungselement (5) angeordnet ist.

## Beschreibung

Die Erfindung betrifft einen Strömungswächter zum automatischen Absperren von mit einem Medium durchströmten Leitungen und/oder Armaturen oder dergleichen bei einem einen definierten Maximalfluß übersteigenden Fluidfluß.

Strömungswächter, die in von einem Medium durchströmten Rohrleitungen wie beispielsweise Gasleitungen und den damit verbundenen Armaturen und Geräten eingesetzt werden, sind in einer Vielzahl von Ausführungen bekannt. Sie dienen dazu, bei einer unzulässigen Durchflußerhöhung des Mediums über einen vorgegebenen Wert die Zufuhr des Mediums zu unterbrechen. Dieses tritt insbesondere dann auf, wenn aufgrund von Beschädigung des Rohrleitungssystems der Fluß des Mediums über Gebühr ansteigt. Bei normalen konstanten Höchstflußmengen beispielsweise aufgrund eines unter Vollast betriebenen Gasverbrauchers wird hingegen der Strömungswächter nicht ausgelöst.

Ein derartiger Strömungswächter ist beispielsweise aus dem deutschen Gebrauchsmuster DE 201 16 899 bekannt. Hierbei ist ein Absperrkörper mit einem Führungsstift haltend verbunden. Der Führungsstift ist mit einem Gehäuse verbunden. An dem Gehäuse ist ein Ventilsitz angeordnet. An dem dem Absperrkörper abgewandten Ende des Führungsstiftes befindet sich ein Anschlag. Zwischen Anschlag und der Stiftaufnahme am Gehäuse ist eine Feder angeordnet, die den Absperrkörper in Offenstellung hält. Wird der Strömungswächter ausgelöst, bewegt sich der Absperrkörper und der Führungsstift in Richtung des Ventilsitzes. Zwischen Offen- und Geschlossenstellung findet eine Bewegung sowohl des Stiftes als auch des Absperrkörpers statt. Verbesserungswürdig an dieser Anordnung ist, daß aufgrund der Bewegung des Absperrkörpers zusammen mit dem Stift ein unvorteilhaft großer Raum für die Relativbewegung des Stiftes zur Verfügung gestellt werden muß. Da beim Auslösen des Strömungswächters der Absperrkörper zusammen mit dem Führungsstift bewegt wird, ist die bewegte Masse relativ groß. Aufgrund der großen zu bewegenden Massen kann bei kleineren Strömungsvolumina eine ordnungsgemäße Funktion des Strömungswächters problematisch sein.

Es ist daher die **Aufgabe** der vorliegenden Erfindung, einen Strömungswächter bereitzustellen, der einen definierten Raum innerhalb des Strömungskanals einnimmt ohne aufgrund von Bewegungen über diesen definierten Raum hinaus zu reichen. Es ist eine weitere Aufgabe der vorliegenden Erfindung, daß die beim Auslösen des Strömungswächters zu bewegenden Massen möglichst klein sind.

**Gelöst** wird diese Aufgabe beim erfindungsgemäßen Strömungswächter dadurch, daß zur Führung des Absperrkörpers ein Führungselement vorgesehen ist, das nach Art eines Stiftes ausgebildet ist und am Stützelement angeordnet ist, wobei der Absperrkörper relativ bewegbar zum Führungselement angeordnet ist.

Der Absperrkörper bewegt sich somit auf dem Führungselement beim Auslösen des Strömungswächters von seiner Offenstellung in die Geschlossenstellung in Richtung eines am Führungselement befindlichen Ventilsitz. Vorteilhaft ist hierbei, daß das Führungselement direkt definiert mit dem Stützelement verbunden ist, wobei gleichzeitig die volle Funktionalität des Strömungswächters beibehalten wird. Er läßt sich somit auch in eng bauenden Bereichen mit bewegten Teilen innerhalb der Rohrleitungen einsetzen, ohne daß ein bewegter Führungsstift mit diesen Teilen in Konflikt gerät.

Mit Vorteil bewegt sich beim Auslösen des Strömungswächters der Absperrkörper relativ auf dem Führungselement. Die zu bewegenden Massen sind daher klein, wodurch eine ordnungsgemäße Funktion auch bei kleinen Strömungsvolumina gewährleistet werden kann. Zur weiteren Gewichtsreduzierung kann an der in Strömungsrichtung rückwärtigen Seite des Absperrkörpers eine Aussparung vorgesehen sein. Durch diese Aussparung weist der Absperrkörper eine Form auf, welche bei möglichst geringem Gewicht ein Erfüllen aller Funktionen ermöglicht. Bei einer Ausführungsform der Erfindung kann die Aussparung eine Eindrehung sein.

Durch die Bewegung des Absperrkörpers relativ zum Führungselement benötigt der erfindungsgemäße Strömungswächter beim Auslösen außer seinem Einbauraum keinen weiteren Aktionsraum, wie es im beschriebenen Stand der Technik der Fall ist. Ein Strömungswächter gemäß der Erfindung ist daher vorteilhaft für den Einsatz unter beengten Raumverhältnissen geeignet.

Der Absperrkörper selbst ist dabei als kreisförmige, flache Scheibe ausgebildet, was ebenfalls bewirkt, daß der vom Strömungswächter in Strömungsrichtung benötigte Bauraum klein ist. Zur produktionstechnischen Vereinfachung ist dabei vorgesehen, daß der Absperrkörper einstückig ausgebildet ist. Am Rand des Absperrkörpers ist zur Erhöhung der Dichtigkeit eine Dichtung vorgesehen. In einer Ausführungsform der Erfindung kann bei geschlossenem Absperrelement vorteilig ein Druckausgleich zwischen der Zuströmungsseite und der Abströmungsseite des Absperrkörpers durch einen Spalt, der zwischen Absperrkörper und Führungsstift vorhanden ist, entstehen. Dabei ist die Größe des Spaltes zwischen diesen beiden Bauteilen letztendlich ausschlaggebend für die Dauer des Druckausgleichvorganges. Wird der Strömungswächter im Bereich höherer Drücke eingesetzt, ist der zwischen Absperrkörper und Führungsstift vorhandene Spalt ausreichend groß, um innerhalb einer akzeptablen Zeit einen Druckausgleich zwischen beiden Seiten des Strömungswächters zu ermöglichen. Soll ein Strömungswächter gemäß der Erfindung im Niederdruckbereich eingesetzt werden, so sieht eine weitere Ausführungsform der Erfindung vor, daß der Absperrkörper mit einer Resetbohrung versehen ist. Durch diese Resetbohrung wird eine definierte Fluidmenge im gesperrten Zustand durch den Absperrkörper hindurchgeführt. Ist die das Auslösen des Strömungswächters auslösende Öffnung, beispielsweise ein Loch im Rohrleitungssystem, wieder geschlossen, baut sich durch das langsame Hindurchströmen des Mediums der Druck auf der der Strömungswächter in Strömungsrichtung nachfolgenden Seite der Rohrleitung solange auf bis ein Druckausgleich zwischen beiden Seiten des Strömungswächters stattgefunden hat und das Ventil selbsttätig wieder öffnet.

Gemäß einer weiteren Lehre der Erfindung ist der Absperrkörper gegen das Stützelement vorgespannt. Die Vorspannkraft hält den Absperrkörper gegen den Strömungsdruck des Mediums in Offenstellung. Vorteilhaft ist der Absperrkörper mit einer Feder gegen das Stützelement vorgespannt. Alternativ kann der Absperrkörper aufgrund seiner Gewichtskraft oder der Reibung zwischen Absperrkörper und Führungselement in der Offenstellung gehalten sein. Um die Vorspannung der Feder an verschiedene den Strömungswächter auslösende Durchflußmengen anzupassen, sieht eine weitere Lehre der Erfindung vor, daß die Position des Endanschlags der Feder auf dem Führungselement selbst einstellbar ist. Der Anschlag kann auf einfache Weise durch einen Federring hergestellt sein. Mit Vorteil dient die Feder auch zum Öffnen des Strömungswächters nach einem Ansprechen und einem anschließenden Druckausgleich, der wie oben beschrieben erfolgt. Nach erfolgtem Druckausgleich drückt die Federkraft den Absperrkörper aus dem Ventilsitz heraus und öffnet den Strömungswächter.

Des weiteren offenbart die Erfindung einen Kugelhahn zum Einbau in von einem Medium durchströmten Leitungen, wobei im Strömungsweg des Kugelhahns ein erfindungsgemäßer Strömungswächter vorgesehen ist. Es kann sich bei diesem Kugelhahn um einen geraden bzw. einen Kugeleckhahn handeln. Auch ist es möglich, daß der Kugelhahn in einem Mengendurchflußzählerelement vorgesehen ist. Eine weitere Lehre der Erfindung sieht vor, daß der Strömungswächter in der Kugel des Kugelhahns direkt eingesetzt ist, wodurch ein sehr kleiner Aufbau des Kugelhahns erreicht werden kann.

Darüber hinaus ist vorgesehen, einen erfindungsgemäßen Strömungswächter in Hausanschlußleitungen von Gebäuden, d. h. unmittelbar vor oder in dem Gebäude anzuordnen. Auf diese Weise sind außerhalb von Gebäuden befindliche Leitungen oder Leitungsnetze vorteilhaft durch Absperren vom Gebäude trennbar.

In einer weiteren vorteilhaften Ausführungsform der Erfindung ist ein Vorschraubventil vorgesehen, wobei der Strömungswächter in ein mit der Leitung verbindbares Gehäuse eingesetzt ist.

Weitere Merkmale und Vorteile der Erfindung ergeben sich aus der nachfolgenden Beschreibung eines Ausführungsbeispiels anhand der beigefügten Figuren. Dabei zeigen:

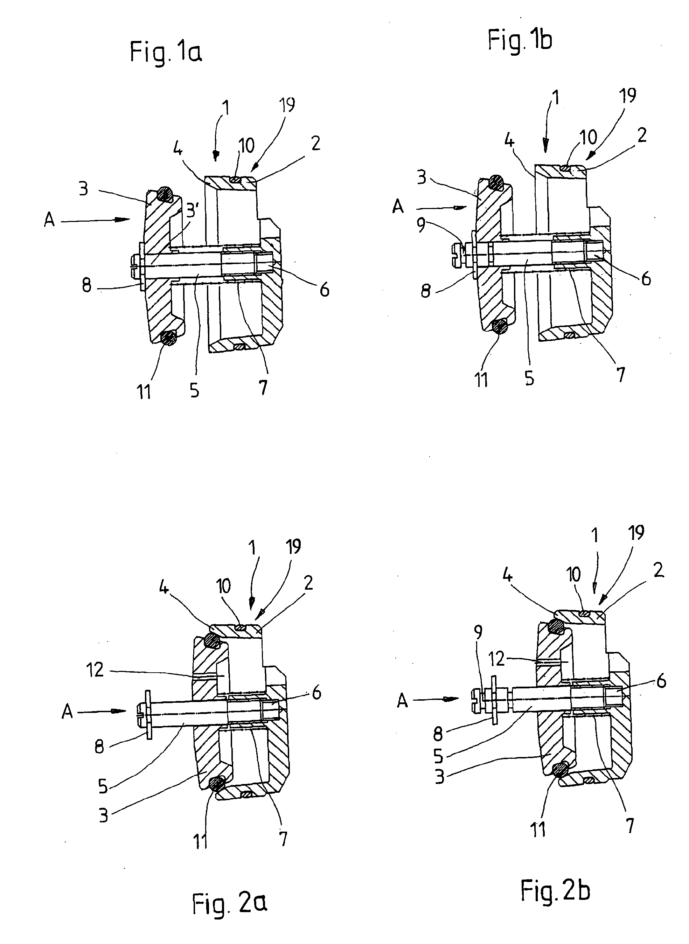

- Fig. 1a:: in geschnittener Ansicht ein erstes erfindungsgemäßes Ausführungsbeispiel für einen Strömungswächter,
- Fig 1 b:: in geschnittener Ansicht ein weiteres erfindungsgemäßes Ausführungsbeispiel für einen Strömungswächter in Offenstellung,
- Fig. 2a:: den in Fig. 1a gezeigten Strömungswächter in Auslösestellung;
- Fig. 2b:: den in Fig. 1b gezeigten Strömungswächter in Auslösestellung,
- Fig. 3:: eine Rückansicht des erfindungsgemäßen Strömungswächters gemäß Fig. 1a,
- Fig. 4:: in geschnittener Ansicht einen Kugelhahn mit erfindungsgemäßen Strömungswächter,
- Fig. 5:: in geschnittener Ansicht einen erfindungsgemäßen Kugeleckhahn mit erfindungsgemäßen Strömungswächter, und

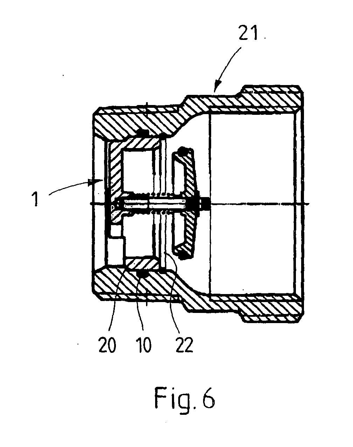

- Fig. 6:: in geschnittener Ansicht ein Vorschraubventil mit erfindungsgemäßen Strömungswächter.

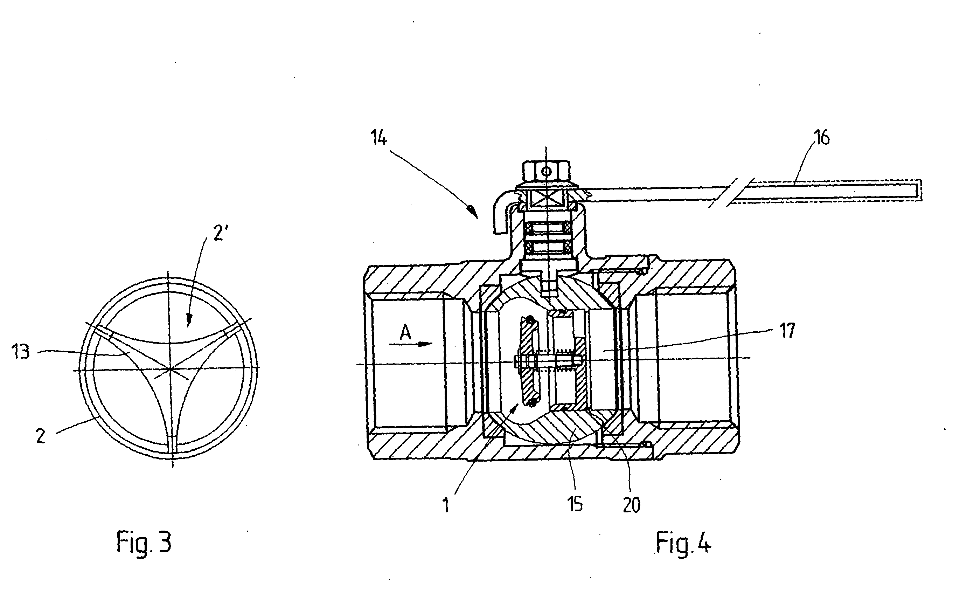

In der Fig. 1a ist im Querschnitt ein erfindungsgemäßer Strömungswächter 1 in Offenstellung dargestellt. Der Strömungswächter 1 weist ein Stützelement 2 auf, durch welches ein Strömungskanal hindurchführt. Das Stützelement 2 kann in der Offenstellung von einem Medium, beispielsweise einem Gas, in Strömungsrichtung A durchströmt werden. Der gezeigte Strömungswächter 1 ist als einzelnes Bauteil ausgeführt. In etwa mittig weist das Stützelement 2 einen konischen Ventilsitz 4 auf. Dem konischen Ventilsitz 4 in Offenstellung entgegen der Strömungsrichtung gegenüberliegend ist ein Absperrkörper 3 angeordnet, welcher eine komplementär zur Form des Ventilsitz 4 ausgebildete konische Schließfläche mit darin eingesetzter Dichtung 11 aufweist. Der Absperrkörper 3 weist eine Öffnung 3' auf, durch die das Führungselement 5 hindurchgeführt ist. Der Absperrkörper 3 ist auf dem Führungselement 5 beweglich angeordnet. Auf der dem Absperrkörper in Offenstellung gegenüberliegenden Seite des Führungselementes ist das Führungselement in eine in dem Stützelement 2 angeordnete Gewindebohrung 6 eingeschraubt. Das Führungselement 5 ist somit fest mit dem Stützelement 2 verbunden. Das Stützelement selbst weist orthogonal zur Strömungsrichtung A Verbindungsstreben 13 auf, siehe Fig. 3. Die zwischen den Verbindungsstreben und dem Außenrand des Stützelements bestehenden Öffnungen ermöglichen es dem Medium durch den Strömungswächter 1 hindurchzufließen. An dem der Rückseite des Absperrkörpers 3 zugewandten Seite des Führungselements 5 befindet sich eine Aufnahme 9 oder auch mehrere Aufnahmen 9 wie in den Fign. 1 b und 2b erkennbar, in denen ein Sicherungsring 8 befestigt ist, der den Anschlag für den Absperrkörper 3 bildet. Der Sicherungsring kann dabei als Federring ausgeführt sein. Zwischen der Gewindebohrung und der Strömungsrichtung abgewandten Seite des Absperrkörpers 3 ist auf dem Führungselement 5 eine Feder 7 aufgebracht. Die Feder 7 kann als Schraubenfeder ausgeführt sein. Die Feder 7 übt dabei eine Druckkraft auf den Absperrkörper 3 aus und hält ihn in der in Fig. 1a und 1b dargestellten Offenstellung des Strömungswächters. Durch ein Umsetzen des Sicherungsring 8 in eine der anderen Aufnahmen 9 wird die Vorspannung der Schraubenfeder eingestellt. Es läßt sich hiermit die Durchflußmenge und die Schließdurchflußmenge beeinflussen.

Um beim Einsetzen des Strömungswächters 1 in eine Rohrleitung oder ein Rohrleitungselement eine ausreichende Dichtigkeit zu erzielen, ist in einer Nut am Stützelement 2 eine Dichtung 10 angebracht. Für den Einbau des Strömungswächters 1 kann vorgesehen sein, daß der Strömungswächter 1 in die Rohrleitung oder das Rohrleitungselement eingepreßt wird. Dazu kann das Stützelement 2 des Strömungswächters 1 eine leicht konisch geformte Außenfläche aufweisen. Alternativ dazu kann vorgesehen sein, daß der Strömungswächter 1 in dem Rohr auf einen Anschlag 20 geschoben und mit einem Sicherungsring 22 gegen unbeabsichtigtes Lösen gesichert wird.

In Fig. 2a bzw. 2b ist die Auslösestellung des Strömungswächters 1 dargestellt. Hierbei ist der Absperrkörper 3 auf dem Ventilsitz 4 aufgepreßt und verschließt somit den Strömungsweg. Durch die Dichtung 11 wird eine zusätzliche Erhöhung der Dichtigkeit gewährleistet. Durch eine am Absperrkörper 3 angebrachte Öffnung 12, welche zum Beispiel eine Bohrung sein kann, kann dabei in Geschlossenstellung eine vordefinierte geringe Fluidmenge hindurchtreten, die, sofern ein erneuter Druckaufbau innerhalb der dem Strömungswächter abgewandten Seite des Rohrleitungssystems möglich ist, zu einem Druckausgleich aufgrund einer Druckerhöhung auf der Gegenseite führt, dadurch kann der Absperrkörper durch die Kraft der Feder aus dem Ventilsitz heraus gedrückt werden und der Strömungswächter öffnet wieder selbsttätig.

In Fig. 4 ist ein erfindungsgemäßer Einbaufall des Strömungswächters in einen Kugelhahn dargestellt. Der Kugelhahn weist dabei eine Kugel 15 auf, die mit einer Durchgangsbohrung 17, die den Strömungsweg darstellt, versehen ist. Die Kugel selber ist durch einen Hebel 16 im Kugelhahn schaltbar. Innerhalb der Bohrung 17 ist der erfindungsgemäße Strömungswächter 1 eingesetzt. Der Einsatz dieses Strömungswächters 1 innerhalb der Kugel 15 ist nur möglich, da der Strömungswächter einen vordefinierten Raum ohne über diesen Raum hinausgehende bewegliche Teile aufweist. Im Auslösefall des Strömungswächters 1 kann der Kugelhahn per Hand durch Betätigen des Hebels 16 und damit durch Schalten der Kugel 15 geschlossen werden. Durch das kleine Raumvolumen in der Kugel 15 erfolgt ein Druckausgleich zwischen beiden Seiten des Strömungswächters 1 sehr schnell. Nachdem der den Druckwächter auslösende Schaden behoben worden ist, wird der Kugelhahn wieder geöffnet, worauf die gesamte Leitung wieder vom Medium durchströmt wird.

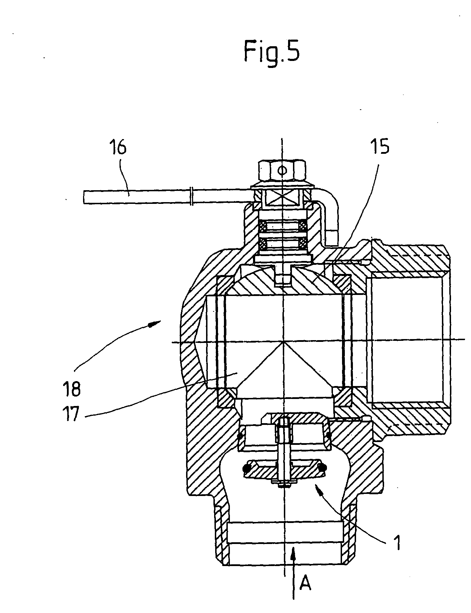

In Fig. 5 wird ein weiterer Anwendungsfall des Strömungswächters 1 dargestellt. Bei der vorliegenden Anbauart handelt es sich um einen Kugeleckhahn, bei dem der Strömungswächter der Kugel direkt vorgeschaltet ist. Hierbei muß kein nennenswerter Sicherheitsabstand zwischen Strömungswächter und Kugel eingehalten werden, da wie zuvor bereits dargelegt keine beweglichen Teile des Strömungswächters über die Grunddimensionierung des Strömungswächters hinaus bewegt werden.

### Bezugszeichenliste

- 1: Strömungswächter
- 2: Stützelement
- 3: Absperrkörper
- 3': Öffnung
- 4: Ventilsitz
- 5: Führungselement
- 6: Gewindebohrung
- 7: Feder
- 8: Sicherungsring
- 9: Aufnahme
- 10: Dichtung
- 11: Dichtung
- 12: Öffnung
- 13: Verbindungsstrebe
- 14: Kugelhahn
- 15: Kugel
- 16: Hebel
- 17: Durchgangsbohrung
- 18: Kugeleckhahn
- 19: konische Außenfläche
- 20: Anschlag
- 21: Gehäuse
- 22: Sicherungsring
- A: Strömungsrichtung

## Patentansprüche

1. Strömungswächter zum automatischen Absperren von mit Medium durchströmten Leitungen und/oder Armaturen und dergleichen mit
einem einen Ventilsitz aufweisenden Stützelement (2) und
einem relativ zum Ventilsitz bewegbar angeordneten Absperrkörper (3),
**dadurch gekennzeichnet, daß**
zur Führung des Absperrkörpers (3) ein Führungselement (5) vorgesehen ist, das nach Art eines Stiftes ausgebildet ist und am Stützelement (2) angeordnet ist, wobei der Absperrkörper (3) relativ bewegbar zum Führungselement (5) angeordnet ist.

2. Strömungswächter nach Anspruch 1, **dadurch gekennzeichnet, daß** der Absperrkörper (3) an seiner in Strömungsrichtung rückwärtigen Seite eine Aussparung, vorzugsweise eine Eindrehung aufweist.

3. Strömungswächter nach Anspruch 1 oder 2, **dadurch gekennzeichnet, daß** der Absperrkörper (3) eine im wesentlichen kreisförmig ausgebildete flache Scheibe ist.

4. Strömungswächter nach einem der Ansprüche 1 bis 3, **dadurch gekennzeichnet, daß** der Absperrkörper (3) einteilig ist.

5. Strömungswächter nach einem der Ansprüche 1 bis 4, **dadurch gekennzeichnet, daß** am Absperrkörper (3) wenigstens eine Dichtung (11) vorgesehen ist.

6. Strömungswächter nach einem der Ansprüche 1 bis 5, **dadurch gekennzeichnet, daß** eine bei geschlossenem Strömungswächter zwischen der Zuströmungsseite und der Abströmungsseite des Absperrkörpers (3) bestehende Druckdifferenz ausgleichbar ist.

7. Strömungswächter nach Anspruch 6, **dadurch gekennzeichnet, daß** die Druckdifferenz durch einen zwischen dem Absperrkörper (3) und dem Führungselement (5) vorliegenden Spalt ausgleichbar ist.

8. Strömungswächter nach Anspruch 6, **dadurch gekennzeichnet, daß** der Absperrkörper (3) zum Ausgleich einer Druckdifferenz mit wenigstens einer Öffnung (12) versehen ist.

9. Strömungswächter nach einem der vorhergehenden Ansprüche, **dadurch gekennzeichnet, daß** der Absperrkörper (3) gegen das Stützelement (2) vorgespannt ist.

10. Strömungswächter nach einem der Ansprüche 1 bis 9, **dadurch gekennzeichnet, daß** der Absperrkörper (3) mit einer Feder (7) vorgespannt ist.

11. Strömungswächter nach Anspruch 9, **dadurch gekennzeichnet, daß** die Feder (7) zwischen Absperrkörper (3) und Stützelement (2) angeordnet ist.

12. Strömungswächter nach einem der Ansprüche 1 bis 11, **dadurch gekennzeichnet, daß** die Position des Anschlags (8) für den Absperrkörper (3) auf dem Führungselement (5) einstellbar ist.

13. Kugelhahn zum Einbau in von Medium durchströmten Leitungen, **dadurch gekennzeichnet, daß** ein Strömungswächter (1) nach einem der Ansprüche 1 bis 12 im Strömungsweg (17) des Kugelhahns vorgesehen ist.

14. Kugelhahn nach Anspruch 13, **dadurch gekennzeichnet, daß** der Kugelhahn ein Kugeleckhahn (18) ist.

15. Kugelhahn nach Anspruch 13 oder 14, **dadurch gekennzeichnet, daß** der Kugelhahn auf der Zuströmungsseite eines Mengendurchflußzählelements angeordnet ist.

16. Kugelhahn nach einem der Ansprüche 13 bis 15, **dadurch gekennzeichnet, daß** der Strömungswächter nach einem der Ansprüche 1 bis 12 in der Kugel (15) des Kugelhahns eingesetzt ist.

17. Vorschraubventil zum Einbau in von Medium durchströmten Leitungen mit einem mit der Leitung verbindbaren Gehäuse, **gekennzeichnet durch** einen Strömungswächter nach einem der Ansprüche 1 bis 12.
